# EUROPEAN PATENT SPECIFICATION

(11) **EP 4 317 735 B1**
(45) Date of publication and mention of the grant of the patent: **30.10.2024**
(21) Application number: 22188322.6
(22) Date of filing: 02.08.2022
(51) Int. Cl.: F16D 65/097, B60T 17/22, F16D 55/00

(54) **BRAKE CALIPER ASSEMBLY FOR A BRAKE DISC OF A BRAKE ASSEMBLY FOR A VEHICLE AND BRAKE ASSEMBLY**
BREMSZANGENANORDNUNG FÜR EINE BREMSSCHEIBE EINER BREMSANLAGE FÜR EIN FAHRZEUG UND BREMSANLAGE
ENSEMBLE ÉTRIER DE FREIN POUR UN DISQUE DE FREIN D'UN ENSEMBLE FREIN POUR VÉHICULE ET ENSEMBLE FREIN

(43) Date of publication of application: 07.02.2024
(73) Proprietor: KNORR-BREMSE Systeme für Nutzfahrzeuge GmbH, 80809 München (DE)
(72) Inventor: ADAMCZYK, Philipp, 82347 Bernried (DE); BLESSING, Michael, 80687 München (DE); GYÖRKE, Zsombor, 8360 Keszthely (HU); HEIGL, Korbinian, 85652 Pliening (DE); TOTH-KATONA, Tamas, 1039 Budapest (HU); HÖS, Levente, 1047 Budapest (HU); SCHÖFBERGER, Tobias, 84048 Mainburg (DE); HOLLOSI, Mate, 1097 Budapest (HU); KLINGNER, Matthias, 82275 Emmering (DE); KOKREHEL, Csaba, 1119 Budapest (HU); KRÜGER, Sven Philip, 81476 München (DE); MONORI, Gyula, 6065 Lakitelek (HU); NAKAMURA, Tatsuro, 1027 Budapest (HU); PESCHEL, Michael, 82296 Schöngeising (DE); TOTH, Janos, 6000 Kecskemét (HU); SZABO, Janos, 1101 Budapest (HU)
(74) Representative: Prüfer & Partner mbB Patentanwälte · Rechtsanwälte

(56) References cited:
- EP-A1- 3 269 993
- US-A- 4 382 491
- US-A1- 2003 192 749

## Description

The present invention relates to a brake caliper assembly for a brake disc of a brake assembly for a vehicle and a brake assembly for a vehicle comprising such brake caliper assembly.

In today's vehicles, such as commercial vehicles, usually brake pads as braking members cover a segment of the brake rotor or brake disc, respectively, as brake member to be braked by respective braking members. One brake pad is positioned on each rotor side and pressed onto the rotor via a clamping mechanism and a brake caliper or from both sides with a clamping mechanism. The rotor is fixedly mounted in an axial direction to the wheel end and rotates. To avoid the contact between brake pads and brake disc when a braking action is not actuated, the use of springs between the brake pads and brake pad carrier is well known. US 2003/0192749 A1, for example, discloses a return spring for pads in a disc brake system and, in particular, a return spring with engagement legs that apply a torque to maintain the pads generally parallel to the rotor in a non-braking state. Other solutions are arranging spring elements between the two brake pads to spread and return them to a rest position after braking. In both cases, good accessibility to the brake pads is needed in order to inspect their condition and wear, and in case of excessive wear to exchange the brake pads together with the springs to assure that the brake assembly works properly.

Specifically, in a floating type caliper brake, such as disclosed in DE 10 2014 212 444 A1, which has one fixed and one movable friction brake lining and, for example, a hydraulic or electromechanical actuating device for pressing the movable friction brake lining against the brake disc, the access to the brake pads is more difficult compared to a standard-frame caliper brake or fixed caliper brake, respectively. The specific design of the floating type caliper does not allow a retraction wire spring to be used for the brake pads, because the space between the brake pads and the rim is limited and already occupied by the caliper. Also, the space above the brake pads is already used by the caliper.

EP 3 269 993 A1 discloses a pneumatically actuated disc brake for a vehicle, with a readjusting device which is an active caliper position control unit comprising an active force generating unit, a transmission unit, a spring element and a control unit.

Therefore, it is an object of the present invention to provide a brake caliper assembly for a brake disc of a brake assembly for a vehicle and brake assembly for a vehicle comprising such brake caliper assembly capable of providing an active caliper release in a compact and effective manner.

The object is solved by the subject-matter of the independent claim. Further aspects of the present invention are subject to the dependent claims.

According to the present invention, a brake caliper assembly for braking a brake disc of a brake assembly for a vehicle comprises a fixed caliper portion operatively connected to at least one first brake pad, wherein the at least one first brake pad is relatively moveable with respect to the fixed caliper portion in a braking direction by an actuator, and a floating caliper portion operatively connected to at least one second brake pad, wherein a braking surface of the at least one second brake pad is arranged in a plane opposed to a plane of a braking surface of the at least one first brake pad in the braking direction, and wherein the floating caliper portion is relatively movable with respect to the fixed caliper portion in the braking direction. The fixed caliper portion comprises at least one first spring pack operatively connected to the at least one first brake pad. The at least one first spring pack comprises at least one outer spring arranged in a housing of the at least one first spring pack and at least one inner spring at least partially accommodated within the at least one outer spring and operatively connected to the at least one outer spring. The at least one outer spring and the at least one inner spring of the at least one first spring pack are arranged and configured to act as a serial spring arrangement with a resulting spring force to move the braking surface of the at least one first brake pad in the braking direction in a direction away from the braking surface of the at least one second brake pad when an actuating force by the actuator to move the braking surface of the at least one first brake pad in the braking direction in a direction towards the braking surface of the at least one second brake pad falls below a predetermined threshold.

Accordingly, the brake caliper assembly is a floating caliper assembly with at least one first brake pad operatively connected to the fixed caliper portion of the floating caliper assembly and at least one second brake pad operatively connected to the floating caliper portion of the floating caliper assembly. The braking surfaces of the at least one first brake pad and the at least one second brake pad are facing each other in the braking direction. A brake disc rotatable about a rotational axis of a respective brake assembly is intended to be arranged between the at least one first brake pad and the at least one second brake pad with each of the respective braking surfaces facing opposed radial surface side of the brake disc with respect to the rotational axis. In such an arrangement, the braking surface of the at least one first brake pad is facing a first radial surface side of the brake disc, and the braking surface of the at least one second brake pad is facing a second radial surface side of the brake disc opposed to the first radial surface side in a direction of the rotational axis. The braking direction is the direction to move the braking surfaces of the at least one first brake pad and the at least one second brake pad toward each other to apply a respective clamping force one the brake disc upon contact. To move the surfaces of the at least one first brake pad and the at least one second brake pad toward each other, the brake caliper assembly comprises the actuator to move the at least one first brake pad in the braking direction relatively to the fixed caliper portion toward the at least one second brake pad. The actuation of the actuator further results in a movement of the floating caliper portion to also move the at least one second brake pad relatively to the fixed caliper portion toward the at least one first brake pad as per known principles of a floating caliper assembly.

To return the at least one first brake pad in a release position, i.e. a position without applying any clamping force on the brake disc, the at least one first brake pad is operatively connected to the fixed caliper portion by the at least one first spring pack. The spring pack may be a wire spring pack to provide the at least one outer spring and the at least one inner spring as wire springs. The at least one first spring pack acting as serial spring arrangement allows an active release for resetting the at least one first brake pad away from the brake disc.

Since the at least one inner spring is at least partially nested in the at least one outer spring, and the at least one outer spring and the at least one inner spring are operatively connected to each other to act as serial spring arrangement, the at least one first spring pack provides a compact design in the braking direction.

Preferably, the predetermined threshold to reset the at least one first brake pad corresponds to the resulting force of the at least one first spring pack or an overall resulting spring force by more than one first spring pack.

In some embodiments, the fixed caliper portion comprises at least two first spring packs acting in parallel on the at least one first brake pad.

In such a configuration, the at least one first brake pad may be supported by the at least two first spring packs to reduce the risk of tilting of the at least one brake pad. Furthermore, the resulting spring force of each of the first spring packs may be reduced in comparison to the use of one first spring pack to achieve the same overall resulting spring force.

In some embodiments, the fixed caliper portion comprises at least one second spring pack operatively connected to the floating caliper portion. The at least one second spring pack comprises at least one outer spring arranged in a housing of the at least one second spring pack and at least one inner spring at least partially accommodated within the at least one outer spring and operatively connected to the at least one outer spring. The at least one outer spring and the at least one inner spring of the at least one second spring pack are arranged and configured to act as a serial spring arrangement with a resulting spring force to move the braking surface of the at least one second brake pad in the braking direction in a direction away from the braking surface of the at least one first brake pad when an actuating force to move the braking surface of the at least one second brake pad in the braking direction in a direction towards the braking surface of the at least one first brake pad falls below a predetermined threshold.

Accordingly, similar as for the at least one first spring pack as active release for resetting the at least one first brake pad, the at least one second spring pack provides an active release for the at least one second brake pad or the floating caliper portion, respectively. Consequently, the brake caliper assembly comprising the at least one first spring pack and the at least second spring pack provides an active caliper release for both, the at least one first brake pad and the at least one second brake pad, to reset the brake caliper assembly after a braking-induced displacement to release the clamping force. Preferably, the predetermined threshold to reset the at least one second brake pad corresponds to the resulting force of the at least one second spring pack or an overall resulting spring force by more than one second spring pack.

In some embodiments, the fixed caliper portion comprises at least two second spring packs acting in parallel on the floating caliper portion.

The same principles as already described with respect to a parallel arrangement of the at least two first spring packs also apply to the parallel arrangement of the at least two second spring packs.

In some embodiments, the at least one second spring pack is arranged behind a bearing.

Accordingly, the at least one second spring pack may be arranged between the fixed caliper portion and the floating caliper portion with the resulting spring force of the at least one second spring pack acting in a direction in parallel to the braking direction.

Preferably, e.g. in a floating caliper assembly, at least one second spring pack is arranged behind the fixed bearing between the floating caliper portion and the fixed caliper portion. By the additional usage of at least one first spring pack, the caliper assembly also provides a loose bearing at the at least one first brake pad, in particular an inboard brake pad. Consequently, such configuration provides a combination of a fixed bearing and loose bearing.

In some embodiments, in a configuration with the first caliper portion comprising at least two second spring packs acting in parallel on floating caliper portion, at least one of the at least two second spring packs is arranged behind a bearing, preferably a fixed bearing, and at least another one of the at least two second spring packs or the at least one first spring pack is arranged behind another bearing, preferably a floating bearing.

In some embodiments, the at least one outer spring and the at least one inner spring of the at least one first spring pack and/or the at least one outer spring and the at least one inner spring of the at least one second spring pack as previously described are configured as compression springs.

Accordingly, the at least one first spring pack and or the at least one second spring pack may provide a configuration, in which the at least one outer spring and the at least one inner spring are acting on a member to be operatively connected to the at least one first brake pad or the floating caliper portion, respectively, to move the at least one first brake pad or the floating caliper portion, respectively, in a release position.

In some embodiments, the at least one outer spring and the at least one inner spring of the at least one first spring pack and/or the at least one outer spring and the at least one inner spring of the at least one second spring pack as previously described provide substantially equal spring rates.

For example, since the at least one outer spring and the at least one inner spring of the at least one first spring pack provide substantially equal spring rates, the at least one outer spring and the at least one inner spring of the at least one first spring pack may be operated with the same force stroke range. Alternatively or in addition, a plurality of first spring packs may provide substantially equal resulting spring rates, for example, to operate the plurality of first spring packs in a parallel arrangement within the same force stroke range. The same principles may also apply for the at least one second spring pack or a plurality of second spring packs, respectively. This may also further apply to the at least one first spring pack and the at least one second spring pack providing substantially equal resulting spring rates.

In some embodiments, the at least one first spring pack and the at least one second spring pack as previously described and/or a plurality of first spring packs and/or of second spring packs provide substantially equal spring lengths.

Due to the substantially equal spring lengths, different tolerance ranges between the respective spring packs, which could cause different spring force characteristics, may be avoided. This is particularly advantageous with respect to the at least one second spring pack, which may act on a guidance of the floating caliper portion. Substantially equal spring lengths may also support a centering of the brake caliper assembly. Accordingly, the principle of substantially equal spring lengths may apply to spring lengths of the at least one spring pack with respect to the at least second spring pack but, alternatively or in addition, also to groups of first spring packs among themselves and/or groups of second spring packs among themselves.

In some embodiments, the at least one outer spring and the at least one inner spring of the at least one first spring pack and/or the at least one outer spring and the at least one inner spring of the at least one second spring pack as previously described are configured to deform elastically over a predetermined maximum stroke.

The predetermined maximum stroke may consider wear of the at least one first brake pad with respect to the at least one first spring pack and/or wear of the at least one second brake pad with respect to the at least one second spring pack. Accordingly, the predetermined maximum stroke of the at least one first spring pack and/or the at least one second spring pack, over which the respective springs are configured to deform elastically, comprises at least the respective maximum actuation stroke for the at least one first brake pad or the at least one second brake pad, respectively, eventually further considering a respective wear, which may extend such actuation stroke.

In some embodiments, the at least one first spring pack and/or the at least one second spring pack as previously described is/are encapsulated, preferably by a cover.

Due to the encapsulation, dust emissions into the at least one first spring pack and/or the at least one second spring pack may be avoided. By providing a cover, preferably a releasable cover, assembly and exchange of the at least one first spring pack and/or the at least one second spring pack or components thereof may be eased.

In some embodiments, the at least one first spring pack is operatively connected to the at least one first brake pad and/or the at least one second spring pack as previously described is operatively connected to the floating caliper portion by a releasable connection, preferably by a connecting member.

For example, the floating caliper portion may comprise at least one respective releasable floating caliper connection interface for a respective connecting member of the at least one second spring pack to releasably connect the at least one second spring pack to the floating caliper portion. Similarly, the at least one first brake pad may have at least one respective releasable first brake pad connection interface to releasably connect the at least one first spring pack to the at least one first brake pad. The connection interfaces may allow easy assembling and disassembling of the at least one first brake pad and/or the at least one second brake pad without the need to exchange the respective spring packs or springs accommodated therein.

In some embodiments, the connection between the first spring pack and the first brake pad and/or the connection between the first spring pack and the fixed caliper portion and/or the connection between the second spring pack and the floating caliper portion and/or the connection between the second spring pack and the fixed caliper portion provides an adjustable connection. Such an adjustable connection may allow at least an initial adjustment in order to balance the forces between the first brake pad, e.g. an inboard brake pad, and the second brake pad, e.g. an outboard brake pad. For example, the adjustable connection may be provided by a thread on the outer circumference of the housing with corresponding threads in the receiving portion of the fixed caliper portion to adjust the position of the respective spring pack within the receiving portion. Alternatively or in addition, the connection interface between the first spring pack and the first brake pad and/or the connection interface between the second spring pack and the floating caliper portion may provide respective threads for adjustment of the relative position between the first spring pack and the first brake pad and/or the connection interface between the second spring pack and the floating caliper portion in the braking direction. Respective threads may be on a pin as described later.

In some embodiments, the at least one first spring pack and/or the at least one second spring pack as previously described comprise/comprises a sleeve configured to operatively connect the respective at least one inner spring and the respective at least one outer spring.

The sleeve for the at least one first spring pack may be formed as a hollow cylinder with an inward projection as an end portion in a longitudinal direction of the cylinder projecting toward the longitudinal axis of the cylinder as abutment for the inner spring at least partially accommodated therein, wherein the end portion projecting toward the longitudinal axis of the cylinder is facing toward the at least one first brake pad. Further, the sleeve for the at least one first spring pack may provide an outward projection as an opposed end portion in the longitudinal direction of the cylinder projecting away from the longitudinal axis of the cylinder as abutment for the outer spring at least partially accommodated around the sleeve or the cylinder body, respectively.

Similarly, the sleeve for the at least one second spring pack may be formed as a hollow cylinder with an end portion in a longitudinal direction of the cylinder projecting toward the longitudinal axis of the cylinder as abutment for the inner spring at least partially accommodated therein, wherein the end portion projecting toward the longitudinal axis of the cylinder is facing toward the floating caliper portion. Further, the sleeve for the at least one second spring pack may provide an opposed end portion in the longitudinal direction of the cylinder projecting away from the longitudinal axis of the cylinder as abutment for the outer spring at least partially accommodated around the sleeve or the cylinder body, respectively.

In some embodiments, the at least one first spring pack and/or the at least one second spring pack as previously described comprise/comprises a pin extending through the respective inner spring in the braking direction and relatively moveable in the braking direction with respect to the respective housing. The respective pin provides the respective operative connection to the at least one first brake pad according to the at least first spring pack or to the floating caliper portion according to the at least one second spring pack, respectively.

The pin may provide a guidance for the inner spring to avoid buckling of the inner spring. Further, the pin of the at least one first spring pack may provide a pin connection interface to operatively connect the at least one first spring pack to the at least one first brake pad by the respective connecting member. Similarly, the pin of the at least one second spring pack may provide a pin connection interface to operatively connect the at least one second spring pack to the floating caliper by the respective connecting member.

The pin is preferably carried by the fixed caliper portion in the floating caliper assembly.

In other words, the fixed caliper portion serves as carrier for the pin, specifically as a carrier for the respective first spring pack and/or second spring pack.

In another aspect, the present invention relates to a brake assembly for a vehicle. The brake assembly comprises a brake caliper assembly as previously described, and a brake disc rotatable about a rotational axis. The brake disc is at least partially arranged between the at least one first brake pad and the at least one second brake pad with the respective braking surfaces of the at least one first brake pad and the at least one second brake pad each facing opposed radial surface sides of the brake disc with respect to the rotational axis.

Any feature described with respect to the brake caliper assembly is also applicable to the brake assembly. In turn, any feature described for the brake assembly with respect to the brake caliper assembly is also applicable to the brake caliper assembly.

The vehicle may be a commercial vehicle and/or an electrically powered or hybrid vehicle. For example, the commercial vehicle may be a truck, a trailer, a bus and/or a combination of a towing vehicle and a trailer. Commercial vehicles are particularly associated with comparably larger and heavier components. Accordingly, the use of the brake caliper assembly or brake assembly, respectively, as previously described for commercial vehicles may allow the labour efforts for maintenance or an exchange of parts to be reduced and/or achieve installation space advantages. According to the latter, in the event of electrically powered or hybrid vehicles, the installation space for a brake assembly may be further reduced, which may also affect labour efforts for maintenance or exchanging parts. The use of the previously described brake caliper assembly or brake assembly, respectively, may therefore contribute to a reduction in such labour efforts and/or required installation space.

Further advantages, aspects and details of the invention are subject to the claims, the following description of exemplary embodiments applying the principles of the invention, and the respective exemplary drawings.
**Figure 1** is a schematic cross-sectional view of a section of a brake caliper assembly according to an exemplary embodiment of the present invention; and
**Figure 2** is a schematic cross-sectional view of a spring pack according to an exemplary embodiment of the present invention.

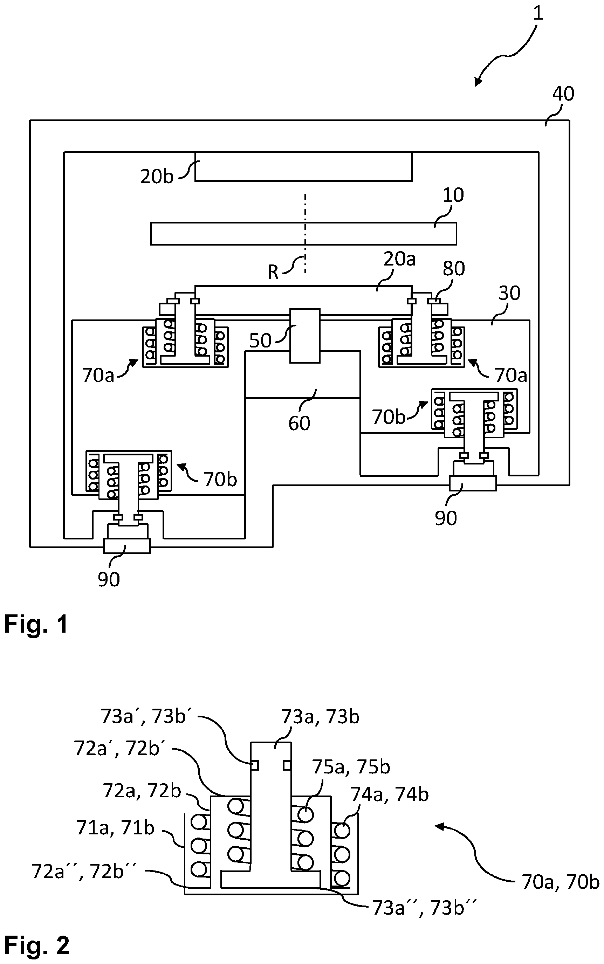

**Figure 1** shows a schematic cross-sectional view of a section of a brake caliper assembly 1 according to an exemplary embodiment of the present invention. The brake caliper assembly 1 is comprised by a brake assembly further comprising a brake disc 10 rotatable about a rotational axis R.

The brake caliper assembly 1 is a floating caliper assembly comprising a fixed caliper portion 30 stationary positioned with respect to the brake disc 10, and a floating caliper portion 40, relatively movable with respect to the fixed caliper portion 30 and therefore the brake disc 10 in an axial direction with respect to the rotational axis R. To apply a clamping force on each radial surface side of the brake disc 10 with respect to the rotational axis R, the brake caliper assembly 1 comprises a first brake pad 20a, operatively connected to the fixed caliper portion 30 with a braking surface facing the radial surface side of the brake disc 10 facing the fixed caliper portion 30, and a second brake pad 20b with a braking surface facing the other radial surface side of the brake disc 10 facing away from the fixed caliper portion 30. The first brake pad 20a is moveable toward the respective radial surface of the brake disc 10 by being relatively moveable in the axial direction with respect to the rotational axis R based on an actuation by an actuator 50. In the exemplary embodiment, the actuator 50 is actuated to move the first brake pad 20a due to pressurisation of a pressure chamber 60 formed by the fixed caliper portion 30 and the floating caliper portion 40. However, in other embodiments, the actuation mechanism may be a different one as known in the art for floating caliper assemblies, wherein the principles of the exemplary embodiment still apply. Simultaneously to the actuation of the actuator 50, the pressurisation also actuates the floating caliper portion to move in the axial direction with respect to the rotational axis R to move the second brake pad 20b toward the other radial surface side of the brake disc.

For an active caliper release to release the brake disc 10 from an applied clamping force by the first brake pad 20a and the second brake pad 20b, the fixed caliper portion 30 comprises two first spring packs 70a and two second spring packs 70b. The first spring packs 70a are arranged in a parallel arrangement on a side of the fixed caliper portion 30 facing the first brake pad 20a, and each of the first spring packs 70a is connected to the first brake pad 20a by a respective connecting member 80 via a pin 73a (Figure 2) extending in the respective first spring pack 70a. The second spring packs 70b are also arranged in a parallel arrangement on a side of the fixed caliper portion 30 facing away from the first brake pad 20a, and each of the second spring packs 70b is connected to the floating caliper portion 40 by a respective connecting member 80 via a pin 73a (Figure 2) extending in the respective second spring pack 70b. Each of the first spring packs 70a and the second spring packs 70b is configured to provide a retracting force to move the first brake pad 20a and the floating caliper portion 40 toward the fixed caliper portion 30 with respect to their portions facing the fixed caliper portion 30 according to the connection to the first spring packs 70a and the second spring packs 70b. If the actuation force due to the pressurisation of the pressure chamber 60 falls below the retracting force by the first spring packs 70a and the second spring packs 70b, the respective movement is initiated as active caliper release. Accordingly, the first brake pad 20a and the second brake pad 20b are moved away from the brake disc 10 in the axial direction with respect to the rotational axis R. However, in some embodiments, further forces may have to be considered such that, in general, the first spring packs 70a and/or the second spring pack 70b provide the retracting movement if the actuation force falls below a predetermined threshold.

To protect the second spring packs 70b from dust or other external impact, the second spring packs 70b are encapsulated by the floating caliper portion 40 and a releasable cover 90 for assembling and disassembling as well as accessibility. Not shown in Figure 1, the first spring packs 70a may also be encapsulated and accessible via a respective cover 90.

**Figure 2** shows a schematic cross-sectional view of a spring pack according to an exemplary embodiment of the present invention. The spring pack represents the first spring packs 70a and the second spring packs 70b accommodated in the fixed caliper portion 30 in Figure 1. In the exemplary embodiment, the first spring packs 70a and the second spring packs are the same in terms of providing substantially the same spring lengths and spring rates in the same spring pack design. Accordingly, the following description of the first spring packs 70a and second spring packs 70b simply refers to a spring pack 70a, 70b, wherein each index "a" represents the applicability to the first spring packs 70a and each index "b" represents the applicability to the second spring packs 70b. The spring pack 70a, 70b comprises a housing 71a, 71b to be received in the fixed caliper portion 30 as per the previously described arrangement. The housing 71a, 71b is formed as a hollow cylinder with an open end facing the component, to which the spring pack 70a, 70b is intended to be connected, and a closed end facing the receiving component, here, the fixed caliper portion 30. Further, the spring pack 70a, 70b comprises a sleeve 72a, 72b at least partially accommodated in the housing 71a, 71b. The sleeve 72a, 72b is also of a substantially cylindrical shape with a smaller cylinder diameter than the one of the housing 71a, 71b. The sleeve 72a, 72b comprises an outward projection 72a", 72b" extending circumferentially around the cylinder end facing the closed end of the housing 71a, 71b and projecting outward with respect to a longitudinal axis of the cylinder body of the sleeve 72a, 72b. Additionally, the sleeve 72a, 72b comprises an inward projection 72a', 72b' extending circumferentially around the cylinder end facing away from the closed end of the housing 71a, 71b and projecting inward with respect to a longitudinal axis of the cylinder body of the sleeve 72a, 72b. The spring pack 70a, 70b further comprises a pin 73a, 73b partially accommodated in the sleeve 72a, 72b and extending along the longitudinal axis of the sleeve 72a, 72b and through the opening formed by the inward projection 72a', 72b' in a direction away the closed end of the housing 71a, 71b to be connected to a respective component, here, the first brake pad 20a or the floating caliper portion 40, respectively. The pin 73a, 73b comprises a recess 73a', 73b' as receiving portion for the connecting member 80 in the portion of the pin 73a, 73b projecting from the sleeve 72a, 72b. The end portion of the pin 73a, 73b facing toward the closed end of the housing 71a, 71b provides a shoulder portion 73a", 73"b as a circumferential projection with respect to the longitudinal axis of the pin 73a, 73b or sleeve 72a, 72b, respectively. An outer spring 74a, 74b is extending around the sleeve 72a, 72b, and is arranged between the housing 71a, 71b and the sleeve 72a, 72b. The outer spring 74a, 74b abuts in the longitudinal direction with respect to the sleeve 72a, 72b against the outward projection 72a", 72b" of the sleeve 72a, 72b and an abutment formed by the receiving component, here, the fixed caliper portion 30. Further, an inner spring 75a, 75b is extending around the pin 73a, 73b, and is arranged between the sleeve 72a, 72b and the pin 73a, 73b. The inner spring 75a, 75b abuts in the longitudinal direction with respect to the sleeve 72a, 72b against the inward projection 72a', 72b' of the sleeve 72a, 72b and the shoulder portion 73a", 73b" of the pin 73a, 73b. The outer spring 74a, 74b and the inner spring 75a, 75b in the exemplary embodiment are compression coil springs with the compression force acting in the direction of the longitudinal axis with respect to the sleeve 72a, 72b. The outer spring 74a, 74b and the inner spring 75a, 75b provide the same spring length and the same spring rate. According to the inner spring 75a, 75b nested within the outer spring 74a, 74b in the given configuration, the inner spring 75a, 75b and the outer spring 74a, 74b act in a serial arrangement.

The operation of the spring pack 70a, 70b will be described with respect to one of the first spring packs 70a but is analogously transferable to the other first spring pack 70a and the second spring packs 70b. Due to pressurisation of the pressure chamber 60 causing the actuator 50 to move the first brake pad 20a toward the brake disc 10, the pin 73a of the first spring pack 70a is moved in the axial direction with respect to the rotational axis R or the longitudinal direction with respect to the sleeve 72a, respectively, away from the closed end of the housing 71a, which is stationary accommodated in the fixed caliper portion 30. Accordingly, the inner spring 75a is compressed and the sleeve 72a is also moved in the axial direction with respect to the rotational axis R or the longitudinal direction with respect to the sleeve 72a, thereby compressing the outer spring 74a. Upon release of the pressure in the pressure chamber 60, the compression force of the inner spring 75a retracts the pin 73a and the outer spring 74a retracts the sleeve 72a and thereby also the pin 73a to release the first brake pad 20a from the brake disc 10.

The invention has been described with respect to an exemplary embodiment.

However, the invention is not limited to the exemplary embodiment. In particular, the housing of the respective spring packs may not be received by the fixed caliper portion but by the counter connecting part, i.e. the first brake pad or the floating caliper portion, to provide a reversed arrangement.

### LIST OF REFERENCE SIGNS

- 1: brake caliper assembly
- 10: brake disc
- 20a: first brake pad
- 20b: second brake pad
- 30: fixed caliper portion
- 40: floating caliper portion
- 50: actuator
- 60: pressure chamber
- 70a: first spring pack
- 70b: second spring pack
- 71a: housing (first spring pack)
- 71b: housing (second spring pack)
- 72a: sleeve (first spring pack)
- 72b: sleeve (second spring pack)
- 72a': inward projection (first spring pack)
- 72b': inward projection (second spring pack)
- 72a": outward projection (first spring pack)
- 72b": outward projection (second spring pack)
- 73a: pin (first spring pack
- 73b: pin (second spring pack)
- 73a': recess (first spring pack)
- 73b': recess (second spring pack)
- 73a": shoulder portion (first spring pack)
- 73b": shoulder portion (second spring pack)
- 74a: outer spring (first spring pack)
- 74b: outer spring (second spring pack)
- 75a: inner spring (first spring pack)
- 75b: inner spring (second spring pack)
- 80: connecting member
- 90: cover
- R: rotational axis (brake disc)

## Claims

1. Brake caliper assembly (1) for braking a brake disc (10) of a brake assembly for a vehicle comprising:
a fixed caliper portion (30) operatively connected to at least one first brake pad (20a), wherein the at least one first brake pad (20a) is relatively moveable with respect to the fixed caliper portion (30) in a braking direction by an actuator (50), and
a floating caliper portion (40) operatively connected to at least one second brake pad (20b), wherein a braking surface of the at least one second brake pad (20b) is arranged in a plane opposed to a plane of a braking surface of the at least one first brake pad (20a) in the braking direction, and wherein the floating caliper portion (40) is relatively movable with respect to the fixed caliper portion (30) in the braking direction,
wherein the fixed caliper portion (30) comprises at least one first spring pack (70a) operatively connected to the at least one first brake pad (20a), and
**characterised in that**
the at least one first spring pack (70a) comprises at least one outer spring (74a) arranged in a housing (71a) of the at least one first spring pack (70a) and at least one inner spring (75a) at least partially accommodated within the at least one outer spring (74a) and operatively connected to the at least one outer spring (74a), wherein the at least one outer spring (74a) and the at least one inner spring (75a) of the at least one first spring pack (70a) are arranged and configured to act as a serial spring arrangement with a resulting spring force to move the braking surface of the at least one first brake pad (20a) in the braking direction in a direction away from the braking surface of the at least one second brake pad (20b) when an actuating force by the actuator (50) to move the braking surface of the at least one first brake pad (20a) in the braking direction in a direction towards the braking surface of the at least one second brake pad (20b) falls below a predetermined threshold.

2. The brake caliper assembly (1) according to claim 1, wherein the fixed caliper portion (30) comprises at least two first spring packs (70a) acting in parallel on the at least one first brake pad (20a).

3. The brake caliper assembly (1) according to claim 1 or 2, wherein the fixed caliper portion (30) comprises at least one second spring pack (70b) operatively connected to the floating caliper portion (40), and wherein the at least one second spring pack (70b) comprises at least one outer spring (74b) arranged in a housing (71b) of the at least one second spring pack (70b) and at least one inner spring (75b) at least partially accommodated within the at least one outer spring (74b) and operatively connected to the at least one outer spring (74b), wherein the at least one outer spring (74b) and the at least one inner spring (75b) of the at least one second spring pack (70b) are arranged and configured to act as a serial spring arrangement with a resulting spring force to move the braking surface of the at least one second brake pad (20b) in the braking direction in a direction away from the braking surface of the at least one first brake pad (20a) when an actuating force to move the braking surface of the at least one second brake pad (20b) in the braking direction in a direction towards the braking surface of the at least one first brake pad (20a) falls below a predetermined threshold.

4. The brake caliper assembly (1) according to claim 3, wherein the fixed caliper portion (30) comprises at least two second spring packs (70b) acting in parallel on the floating caliper portion (40).

5. The brake caliper assembly (1) according to claim 3 or 4, wherein at least one second spring pack (70b) is arranged behind a bearing.

6. The brake caliper assembly (1) according to claim 5, wherein, in a configuration according to claim 4, at least one of the at least two second spring packs (70b) is arranged behind the bearing, preferably a fixed bearing, and at least another one of the at least two second spring packs (70b) or the at least one first spring pack is arranged behind another bearing, preferably a floating bearing.

7. The brake caliper assembly (1) according to any one of the proceeding claims, wherein the at least one outer spring (74a) and the at least one inner spring (75a) of the at least one first spring pack (70a) and/or the at least one outer spring (74b) and the at least one inner spring (75b) of the at least one second spring pack (70b) according to any one of the claims 3 to 6 are configured as compression springs.

8. The brake caliper assembly (1) according to any one of the proceeding claims, wherein the at least one outer spring (74a) and the at least one inner spring (75a) of the at least one first spring pack (70a) and/or the at least one outer spring (74b) and the at least one inner spring (75b) of the at least one second spring pack (70b) according to any one of the claims 3 to 7 provide substantially equal spring rates.

9. The brake caliper assembly (1) according to any one of the proceeding claims, wherein the at least one first spring pack (70a) and the at least one second spring pack (70b) according to any one of the claims 3 to 8 and/or a plurality of first spring packs (70a) and/or of second spring packs (70b) provide substantially equal spring lengths.

10. The brake caliper assembly (1) according to any one of the proceeding claims, wherein the at least one outer spring (74a) and the at least one inner spring (75a) of the at least one first spring pack (70a) and/or the at least one outer spring (74b) and the at least one inner spring (75b) of the at least one second spring pack (70b) according to any one of the claims 3 to 9 are configured to deform elastically over a predetermined maximum stroke.

11. The brake caliper assembly (1) according to any one of the proceeding claims, wherein the at least one first spring pack (70a) and/or the at least one second spring pack (70b) according to any one of the claims 3 to 10 is/are encapsulated, preferably by a cover (90).

12. The brake caliper assembly (1) according to any one of the proceeding claims, wherein the at least one first spring pack (70a) is operatively connected to the at least one first brake pad (20a) and/or the at least one second spring pack (70b) according to any one of the claims 3 to 11 is operatively connected to the floating caliper portion (40) by a releasable connection, preferably by a connecting member (80).

13. The brake caliper assembly (1) according to any one of the proceeding claims, wherein the at least one first spring pack (70a) and/or the at least one second spring pack (70b) according to any one of the claims 3 to 12 comprise/comprises a sleeve (72a, 72b) configured to operatively connect the respective at least one inner spring (75a) and the respective at least one outer spring (74a).

14. The brake caliper assembly (1) according to any one of the proceeding claims, wherein the at least one first spring pack (70a) and/or the at least one second spring pack (70b) according to any one of the claims 3 to 13 comprise/comprises a pin (73a, 73b) extending through the respective inner spring (75, 75b) in the braking direction and relatively moveable in the braking direction with respect to the respective housing (71a, 71b), wherein the respective pin (73a, 73b) provides the respective operative connection to the at least one first brake pad (20a) according to the at least first spring pack (70a) or to the floating caliper portion (40) according to the at least one second spring pack (70b), respectively.

15. Brake assembly for a vehicle comprising:
a brake caliper assembly (1) according to any one of the claims 1 to 14, and
a brake disc (10) rotatable about a rotational axis (R),
wherein the brake disc (10) is at least partially arranged between the at least one first brake pad (20a) and the at least one second brake pad (20b) with the respective braking surfaces of the at least one first brake pad (20a) and the at least one second brake pad (20b) each facing opposed radial surface sides of the brake disc (10) with respect to the rotational axis (R).

## Patentansprüche

1. Bremssattelanordnung (1) zum Bremsen einer Bremsscheibe (10) einer Bremsanordnung für ein Fahrzeug, umfassend:
einen festen Sattelabschnitt (30), der mit mindestens einem ersten Bremsbelag (20a) wirkverbunden ist, wobei der mindestens eine erste Bremsbelag (20a) über eine Betätigungsvorrichtung (50) relativ in Bezug auf den festen Sattelabschnitt (30) in einer Bremsrichtung beweglich ist, und
einen schwimmenden Sattelabschnitt (40), der mit mindestens einem zweiten Bremsbelag (20b) wirkverbunden ist, wobei eine Bremsoberfläche des mindestens einen zweiten Bremsbelags (20b) in einer Ebene angeordnet ist, die einer Ebene einer Bremsoberfläche des mindestens einen ersten Bremsbelags (20a) in der Bremsrichtung gegenüberliegt, und wobei der schwimmende Sattelabschnitt (40) relativ in Bezug auf den festen Sattelabschnitt (30) in der Bremsrichtung beweglich ist, wobei der feste Sattelabschnitt (30) mindestens ein erstes Federpaket (70a) umfasst, das mit dem mindestens einen ersten Bremsbelag (20a) wirkverbunden ist, und
**dadurch gekennzeichnet, dass** das mindestens eine erste Federpaket (70a) mindestens eine äußere Feder (74a), die in einem Gehäuse (71a) des mindestens einen ersten Federpakets (70a) angeordnet ist, und mindestens eine innere Feder (75a) umfasst, die mindestens teilweise innerhalb der mindestens einen äußeren Feder (74a) untergebracht ist und mit der mindestens einen äußeren Feder (74a) wirkverbunden ist, wobei die mindestens eine äußere Feder (74a) und die mindestens eine innere Feder (75a) des mindestens einen ersten Federpakets (70a) angeordnet und konfiguriert sind, um als serielle Federanordnung mit einer resultierenden Federkraft zu wirken, um die Bremsoberfläche des mindestens einen ersten Bremsbelags (20a) in der Bremsrichtung in eine Richtung von der Bremsoberfläche des mindestens einen zweiten Bremsbelags (20b) weg zu bewegen, wenn eine Betätigungskraft durch die Betätigungsvorrichtung (50), um die Bremsoberfläche des mindestens einen ersten Bremsbelags (20a) in der Bremsrichtung in eine Richtung zu der Bremsoberfläche des mindestens einen zweiten Bremsbelags (20b) hin zu bewegen, eine vorbestimmte Schwelle unterschreitet.

2. Bremssattelanordnung (1) nach Anspruch 1, wobei der feste Sattelabschnitt (30) mindestens zwei erste Federpakete (70a) umfasst, die parallel auf den mindestens einen ersten Bremsbelag (20a) wirken.

3. Bremssattelanordnung (1) nach Anspruch 1 oder 2, wobei der feste Sattelabschnitt (30) mindestens ein zweites Federpaket (70b) umfasst, das mit dem schwimmenden Sattelabschnitt (40) wirkverbunden ist, und wobei das mindestens eine zweite Federpaket (70b) mindestens eine äußere Feder (74b), die in einem Gehäuse (71b) des mindestens einen zweiten Federpakets (70b) angeordnet ist, und mindestens eine innere Feder (75b) umfasst, die mindestens teilweise innerhalb der mindestens einen äußeren Feder (74b) untergebracht ist und mit der mindestens einen äußeren Feder (74b) wirkverbunden ist, wobei die mindestens eine äußere Feder (74b) und die mindestens eine innere Feder (75b) des mindestens einen zweiten Federpakets (70b) angeordnet und konfiguriert sind, um als serielle Federanordnung mit einer resultierenden Federkraft zu wirken, um die Bremsoberfläche des mindestens einen zweiten Bremsbelags (20b) in der Bremsrichtung in eine Richtung von der Bremsfläche des mindestens einen ersten Bremsbelags (20a) weg zu bewegen, wenn eine Betätigungskraft, um die Bremsfläche des mindestens einen zweiten Bremsbelags (20b) in der Bremsrichtung in eine Richtung zu der Bremsfläche des mindestens einen ersten Bremsbelags (20a) hin zu bewegen, eine vorbestimmte Schwelle unterschreitet.

4. Bremssattelanordnung (1) nach Anspruch 3, wobei der feste Sattelabschnitt (30) mindestens zwei zweite Federpakete (70b) umfasst, die parallel auf den schwimmenden Sattelabschnitt (40) wirken.

5. Bremssattelanordnung (1) nach Anspruch 3 oder 4, wobei mindestens ein zweites Federpaket (70b) hinter einem Lager angeordnet ist.

6. Bremssattelanordnung (1) nach Anspruch 5, wobei in einer Konfiguration nach Anspruch 4 mindestens eines der mindestens zwei zweiten Federpakete (70b) hinter dem Lager, vorzugsweise einem festen Lager, angeordnet ist, und mindestens ein anderes der mindestens zwei zweiten Federpakete (70b) oder das mindestens eine erste Federpaket hinter einem anderen Lager, vorzugsweise einem schwimmenden Lager, angeordnet ist.

7. Bremssattelanordnung (1) nach einem der vorstehenden Ansprüche, wobei die mindestens eine äußere Feder (74a) und die mindestens eine innere Feder (75a) des mindestens einen ersten Federpakets (70a) und/oder die mindestens eine äußere Feder (74b) und die mindestens eine innere Feder (75b) des mindestens einen zweiten Federpakets (70b) nach einem der Ansprüche 3 bis 6 als Druckfedern konfiguriert sind.

8. Bremssattelanordnung (1) nach einem der vorstehenden Ansprüche, wobei die mindestens eine äußere Feder (74a) und die mindestens eine innere Feder (75a) des mindestens einen ersten Federpakets (70a) und/oder die mindestens eine äußere Feder (74b) und die mindestens eine innere Feder (75b) des mindestens einen zweiten Federpakets (70b) nach einem der Ansprüche 3 bis 7 im Wesentlichen gleiche Federraten bereitstellen.

9. Bremssattelanordnung (1) nach einem der vorstehenden Ansprüche, wobei das mindestens eine erste Federpaket (70a) und das mindestens eine zweite Federpaket (70b) nach einem der Ansprüche 3 bis 8 und/oder eine Vielzahl von ersten Federpaketen (70a) und/oder zweiten Federpaketen (70b) im Wesentlichen gleiche Federlängen bereitstellen.

10. Bremssattelanordnung (1) nach einem der vorstehenden Ansprüche, wobei die mindestens eine äußere Feder (74a) und die mindestens eine innere Feder (75a) des mindestens einen ersten Federpakets (70a) und/oder die mindestens eine äußere Feder (74b) und die mindestens eine innere Feder (75b) des mindestens einen zweiten Federpakets (70b) nach einem der Ansprüche 3 bis 9 konfiguriert sind, um sich über einen vorbestimmten maximalen Hub elastisch zu verformen.

11. Bremssattelanordnung (1) nach einem der vorstehenden Ansprüche, wobei das mindestens eine erste Federpaket (70a) und/oder das mindestens eine zweite Federpaket (70b) nach einem der Ansprüche 3 bis 10 vorzugsweise über eine Abdeckung (90) verkapselt ist/sind.

12. Bremssattelanordnung (1) nach einem der vorstehenden Ansprüche, wobei das mindestens eine erste Federpaket (70a) mit dem mindestens einen ersten Bremsbelag (20a) wirkverbunden ist und/oder das mindestens eine zweite Federpaket (70b) nach einem der Ansprüche 3 bis 11 über eine lösbare Verbindung, vorzugsweise über ein Verbindungselement (80), mit dem schwimmenden Sattelabschnitt (40) wirkverbunden ist.

13. Bremssattelanordnung (1) nach einem der vorstehenden Ansprüche, wobei das mindestens eine erste Federpaket (70a) und/oder das mindestens eine zweite Federpaket (70b) nach einem der Ansprüche 3 bis 12 eine Hülse (72a, 72b) umfasst/umfassen, die konfiguriert ist, um die jeweilige mindestens eine innere Feder (75a) und die jeweilige mindestens eine äußere Feder (74a) wirkzuverbinden.

14. Bremssattelanordnung (1) nach einem der vorstehenden Ansprüche, wobei das mindestens eine erste Federpaket (70a) und/oder das mindestens eine zweite Federpaket (70b) nach einem der Ansprüche 3 bis 13 einen Stift (73a, 73b) umfasst/umfassen, der sich in der Bremsrichtung durch die jeweilige innere Feder (75, 75b) erstreckt und in der Bremsrichtung relativ in Bezug auf das jeweilige Gehäuse (71a, 71b) beweglich ist, wobei der jeweilige Stift (73a, 73b) jeweils die jeweilige Wirkverbindung mit dem mindestens einen ersten Bremsbelag (20a) gemäß dem mindestens ersten Federpaket (70a) oder mit dem schwimmenden Sattelabschnitt (40) gemäß dem mindestens einen zweiten Federpaket (70b) bereitstellt.

15. Bremsanordnung für ein Fahrzeug, umfassend:
eine Bremssattelanordnung (1) nach einem der Ansprüche 1 bis 14, und
eine Bremsscheibe (10), die um eine Drehachse (R) drehbar ist,
wobei die Bremsscheibe (10) mindestens teilweise zwischen dem mindestens einen ersten Bremsbelag (20a) und dem mindestens einen zweiten Bremsbelag (20b) angeordnet ist, wobei die jeweiligen Bremsoberflächen des mindestens einen ersten Bremsbelags (20a) und des mindestens einen zweiten Bremsbelags (20b) jeweils in Bezug auf die Drehachse (R) gegenüberliegenden radialen Oberflächenseiten der Bremsscheibe (10) zugewandt sind.

## Revendications

1. Ensemble étrier de frein (1) pour freiner un disque de frein (10) d'un ensemble frein d'un véhicule comprenant :
une partie étrier fixe (30) reliée fonctionnellement à au moins une première plaquette de frein (20a), dans lequel la au moins une première plaquette de frein (20a) est relativement mobile par rapport à la partie étrier fixe (30) dans une direction de freinage par un actionneur (50), et
une partie étrier flottant (40) reliée fonctionnellement à au moins une seconde plaquette de frein (20b), dans lequel une surface de freinage de la au moins une seconde plaquette de frein (20b) est agencée dans un plan opposé à un plan d'une surface de freinage de la au moins une première plaquette de frein (20a) dans la direction de freinage, et dans lequel la partie étrier flottant (40) est relativement mobile par rapport à la partie étrier fixe (30) dans la direction de freinage, dans lequel la partie étrier fixe (30) comprend au moins un premier bloc-ressort (70a) relié fonctionnellement à la au moins une première plaquette de frein (20a), et
**caractérisé en ce que** le au moins un premier bloc-ressort (70a) comprend au moins un ressort extérieur (74a) agencé dans un boîtier (71a) du au moins un premier bloc-ressort (70a) et au moins un ressort intérieur (75a) au moins partiellement logé dans le au moins un ressort extérieur (74a) et relié fonctionnellement au au moins un ressort extérieur (74a), dans lequel le au moins un ressort extérieur (74a) et le au moins un ressort intérieur (75a) du au moins un premier bloc-ressort (70a) sont agencés et configurés pour agir comme un agencement de ressorts en série avec une force de ressort résultante pour déplacer la surface de freinage de la au moins une première plaquette de frein (20a) dans la direction de freinage dans une direction s'éloignant de la surface de freinage de la au moins une seconde plaquette de frein (20b) lorsqu'une force d'actionnement par l'actionneur (50) pour déplacer la surface de freinage de la au moins une première plaquette de frein (20a) dans la direction de freinage dans une direction vers la surface de freinage de la au moins une seconde plaquette de frein (20b) tombe au-dessous d'un seuil prédéterminé.

2. Ensemble étrier de frein (1) selon la revendication 1, dans lequel la partie étrier fixe (30) comprend au moins deux premiers blocs-ressorts (70a) agissant en parallèle sur la au moins une première plaquette de frein (20a).

3. Ensemble étrier de frein (1) selon la revendication 1 ou 2, dans lequel la partie étrier fixe (30) comprend au moins un second bloc-ressort (70b) relié fonctionnellement à la partie étrier flottant (40), et dans lequel le au moins un second bloc-ressort (70b) comprend au moins un ressort extérieur (74b) agencé dans un boîtier (71b) du au moins un second bloc-ressort (70b) et au moins un ressort intérieur (75b) au moins partiellement logé dans le au moins un ressort extérieur (74b) et relié fonctionnellement au au moins un ressort extérieur (74b), dans lequel le au moins un ressort extérieur (74b) et le au moins un ressort intérieur (75b) du au moins un second bloc-ressort (70b) sont agencés et configurés pour agir comme un agencement de ressorts en série avec une force de ressort résultante pour déplacer la surface de freinage de la au moins seconde plaquette de frein (20b) dans la direction de freinage dans une direction s'éloignant de la surface de freinage de la au moins une première plaquette de frein (20a) lorsqu'une force d'actionnement pour déplacer la surface de freinage de la au moins une seconde plaquette de frein (20b) dans la direction de freinage dans une direction vers la surface de freinage de la au moins une première plaquette de frein (20a) tombe au-dessous d'un seuil prédéterminé.

4. Ensemble étrier de frein (1) selon la revendication 3, dans lequel la partie étrier fixe (30) comprend au moins deux seconds blocs-ressorts (70b) agissant en parallèle sur la partie étrier flottant (40).

5. Ensemble étrier de frein (1) selon la revendication 3 ou 4, dans lequel au moins un second bloc-ressort (70b) est agencé derrière un palier.

6. Ensemble étrier de frein (1) selon la revendication 5, dans lequel, dans une configuration selon la revendication 4, au moins l'un des au moins deux seconds blocs-ressorts (70b) est agencé derrière le palier, de préférence un palier fixe, et au moins un autre des au moins deux seconds blocs-ressorts (70b) ou le au moins un premier bloc-ressort est agencé derrière un autre palier, de préférence un palier flottant.

7. Ensemble étrier de frein (1) selon l'une quelconque des revendications précédentes, dans lequel le au moins un ressort extérieur (74a) et le au moins un ressort intérieur (75a) du au moins un premier bloc-ressort (70a) et/ou le au moins un ressort extérieur (74b) et le au moins un ressort intérieur (75b) du au moins un second bloc-ressort (70b) selon l'une quelconque des revendications 3 à 6 sont configurés comme des ressorts de compression.

8. Ensemble étrier de frein (1) selon l'une quelconque des revendications précédentes, dans lequel le au moins un ressort extérieur (74a) et le au moins un ressort intérieur (75a) du au moins un premier bloc-ressort (70a) et/ou le au moins un ressort extérieur (74b) et le au moins un ressort intérieur (75b) du au moins un second bloc-ressort (70b) selon l'une quelconque des revendications 3 à 7 fournissent des raideurs totales sensiblement égales.

9. Ensemble étrier de frein (1) selon l'une quelconque des revendications précédentes, dans lequel le au moins un premier bloc-ressort (70a) et le au moins un second bloc-ressort (70b) selon l'une quelconque des revendications 3 à 8 et/ou une pluralité de premiers blocs-ressorts (70a) et/ou de seconds blocs-ressorts (70b) fournissent des longueurs de ressort sensiblement égales.

10. Ensemble étrier de frein (1) selon l'une quelconque des revendications précédentes, dans lequel le au moins un ressort extérieur (74a) et le au moins un ressort intérieur (75a) du au moins un premier bloc-ressort (70a) et/ou le au moins un ressort extérieur (74b) et le au moins un ressort intérieur (75b) du au moins un second bloc-ressort (70b) selon l'une quelconque des revendications 3 à 9 sont configurés pour se déformer élastiquement sur une course maximale prédéterminée.

11. Ensemble étrier de frein (1) selon l'une quelconque des revendications précédentes, dans lequel le au moins un premier bloc-ressort (70a) et/ou le au moins un second bloc-ressort (70b) selon l'une quelconque des revendications 3 à 10 est/sont encapsulé(s), de préférence par un couvercle (90).

12. Ensemble étrier de frein (1) selon l'une quelconque des revendications précédentes, dans lequel le au moins un premier bloc-ressort (70a) est relié fonctionnellement à la au moins une première plaquette de frein (20a) et/ou le au moins second bloc-ressort (70b) selon l'une quelconque des revendications 3 à 11 est relié fonctionnellement à la partie étrier flottant (40) par une liaison libérable, de préférence par un élément de liaison (80).

13. Ensemble étrier de frein (1) selon l'une quelconque des revendications précédentes, dans lequel le au moins un premier bloc-ressort (70a) et/ou le au moins un second bloc-ressort (70b) selon l'une quelconque des revendications 3 à 12 comprennent/comprend un manchon (72a, 72b) configuré pour relier fonctionnellement le au moins un ressort intérieur respectif (75a) et le au moins un ressort extérieur respectif (74a).

14. Ensemble étrier de frein (1) selon l'une quelconque des revendications précédentes, dans lequel le au moins un premier bloc-ressort (70a) et/ou le au moins un second bloc-ressort (70b) selon l'une quelconque des revendications 3 à 13 comprennent/comprend une broche (73a, 73b) s'étendant à travers le ressort intérieur respectif (75, 75b) dans la direction de freinage et relativement mobile dans la direction de freinage par rapport au boîtier respectif (71a, 71b), dans lequel la broche respective (73a, 73b) fournit la liaison fonctionnelle respective à la au moins une première plaquette de frein (20a) selon le au moins premier bloc-ressort (70a) ou à la partie étrier flottant (40) selon le au moins un second bloc-ressort (70b), respectivement.

15. Ensemble frein pour véhicule comprenant :
un ensemble étrier de frein (1) selon l'une quelconque des revendications 1 à 14, et
un disque de frein (10) rotatif autour d'un axe de rotation (R),
dans lequel le disque de frein (10) est au moins partiellement agencé entre la au moins une première plaquette de frein (20a) et la au moins une seconde plaquette de frein (20b), les surfaces de freinage respectives de la au moins une première plaquette de frein (20a) et de la au moins une seconde plaquette de frein (20b) étant chacune tournées vers des côtés de surface radiale opposés du disque de frein (10) par rapport à l'axe de rotation (R).
